# EUROPEAN PATENT APPLICATION

(11) **EP 1 564 902 A1**
(43) Date of publication of application: **17.08.2005**
(21) Application number: 04728912.9
(22) Date of filing: 22.04.2004
(51) Int. Cl.: H04B 1/707

(54) **SYNCHRONIZATION PROCESSING DEVICE AND SYNCHRONIZATION PROCESSING METHOD**

(30) Priority: 25.04.2003 JP 2003122475
(71) Applicant: MATSUSHITA ELECTRIC INDUSTRIAL CO., LTD., Kadoma-shi, Osaka 571-8501 (JP)
(72) Inventor: NISHINO, Hidetoshi, Yokohama-shi, Kanagawa 221-0801 (JP)
(74) Representative: Grünecker, Kinkeldey, Stockmair & Schwanhäusser Anwaltssozietät
(86) International application number: PCT/JP2004/005792
(87) International publication number: WO 2004/098086

(57) **Abstract**

Transmission-off period detector 103 detects the transmission-off period of the mobile apparatus from compressed mode parameter. Delay profile generation controller 104 determines whether or not the transmission-off period and the delay profile creation period overlap, and, if the transmission-off period and the delay profile creation period overlap, instructs delay profile generator 105 to change the order of the channels to have delay profiles created. Delay profile generator 105 creates delay profiles in the order of the channels indicated by delay profile generation controller 104. Path searcher 105 detects the receiving timing where a delay profile has a peak. By this means, it is possible to prevent a state where the delay profile of a specific communicating party cannot be created, and, consequently, it is possible to detect each communicating party's receiving timing with certainty.

## Description

### Technical field

The present invention relates to a synchronization processing apparatus and a synchronization processing method. More particularly, the present invention relates to a synchronization processing apparatus and a synchronization processing method that create delay profiles and detect receiving timings.

### Background art

One common method of receiving processing in a CDMA base station apparatus is to create a delay profile from a correlation value between a received baseband signal a spreading code, and detect the timing of the received path by detecting a peak in the delay profile. The base station apparatus must receive multiple channels simultaneously. Also, a cellular system generally divides the area that one base station apparatus covers into multiple sectors and provides a transmitting/receiving antenna in each sector. Between the neighboring sectors under the same base station apparatus, an inter-sector HO (handover) is performed. Between the neighboring base station apparatuses, an inter-cell HO is performed.

In addition, in accordance with needs, a mobile apparatus switches between a normal mode and a compressed mode and communicates with the base station apparatus in accordance with instructions from a higher control station. In the compressed mode, the spread rate for information data frames is reduced on a temporary basis, providing in the frame a time for a transmission-off period and transmitting the frame. The mobile apparatus uses this blank time and receives signals of different frequencies from the cell it is in or from the base stations of the neighboring cells. Consequently, when a base station apparatus and a mobile apparatus communicating in a normal mode enter a compressed mode, the base station apparatus, having been communicating up till then, will be unable to receive signals from the mobile apparatus that also has entered the compressed mode, during a certain period of the compressed mode (i.e. transmission-off state in the mobile apparatus).

Conventionally, in delay profile generation, multiple channels are subjected to time division processing so as to reduce the hardware scale. That is, the delay profile generation timing per channel--in other words, the baseband signal subject to processing per channel--comes at fixed timings in the base station reference frame or the reference slot.

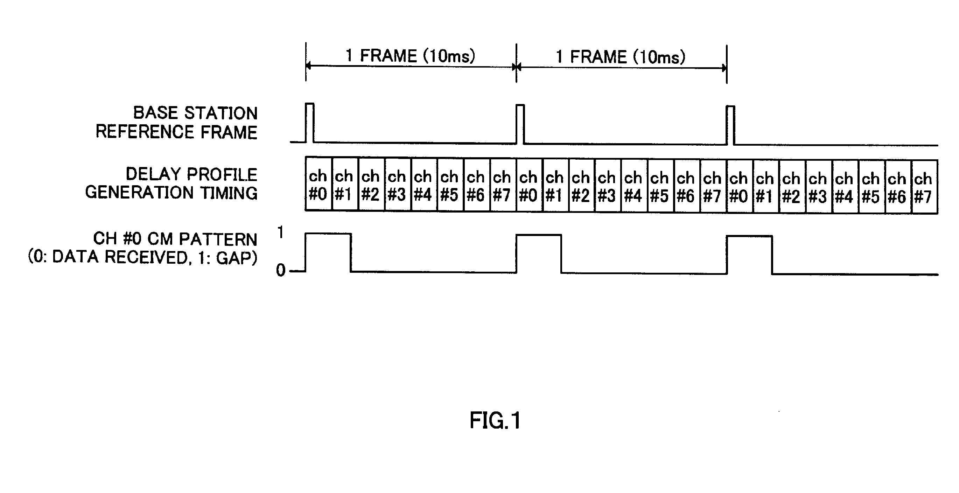

FIG.1 illustrates conventional delay profile generation timings of individual channels at fixed timings. The base station reference frame of FIG.1 represents the reference frame of the base station apparatus, where one frame is 10ms.The delay profile generation timings of FIG. 1 show delay profile generation timings. The CM pattern of ch #0 in FIG.1 represents the timing where the mobile apparatus communicating by means of channel #0 enters a transmission-off state in the compressed mode, where [1] represents the transmission-off state and [0] represents the transmission-on state. In FIG.1, time advances toward right.

In every frame, delay profiles of all channels are created in order from channel #0. Moreover, the transmission-off timing is determined through operation using compressed mode parameter, and occurs in a predetermined cycle.

However, with the conventional synchronization processing apparatus and the synchronization processing method, for example in the case of FIG.1, the delay profile creation timing in channel #0 overlaps with the transmission-off timing of the mobile apparatus communicating by means of channel #0, and, in this case, the delay profile of this mobile apparatus having an overlapping timing cannot be generated, which leads to the problem that the receiving timing cannot be detected.

### Summary of the invention

It is therefore an object of the present invention to provide a synchronization processing apparatus and a synchronization processing method that make it possible to detect each communicating party's receiving timing with certainty by preventing a state where the delay profile of a specific communicating party cannot be created.

The above object can be achieved by determining the transmission-off period from compressed mode parameter, which is provided to make the mobile apparatus set a transmission-off period in the compressed mode, and by setting the delay profile creation timings of individual mobile apparatuses such that the delay profile creation period and the transmission-off period do not overlap in any mobile apparatus.

### Brief description of drawings

FIG.1 illustrates transmission-off period timings and delay profile creation timings;
FIG.2 is a block diagram showing a configuration of a receiving apparatus according to Embodiment 1 of the present invention;
FIG.3 is a flowchart showing operation of the receiving apparatus according to Embodiment 1 of the present invention;
FIG.4 illustrates transmission-off period timings and delay profile creation timings;
FIG.5 illustrates transmission-off period timings and delay profile creation timings;
FIG.6 is a block diagram showing a configuration of a receiving apparatus according to Embodiment 2 of the present invention;
FIG.7 is a block diagram showing a configuration of a received baseband signal switch according to Embodiment 2 of the present invention;
FIG.8 is a schematic view representing a mobile apparatus communicating with a base station apparatus in sector S1;
FIG.9 illustrates transmission-off period timings and delay profile creation timings; FIG.10 illustrates channel assignment in sectors in a frame; and
FIG.11 illustrates transmission-off period timings and delay profile creation timings.

### Best mode for carrying out the invention

Now, embodiments of the present invention will be described below in detail with reference to the accompanying drawings.

### (Embodiment 1)

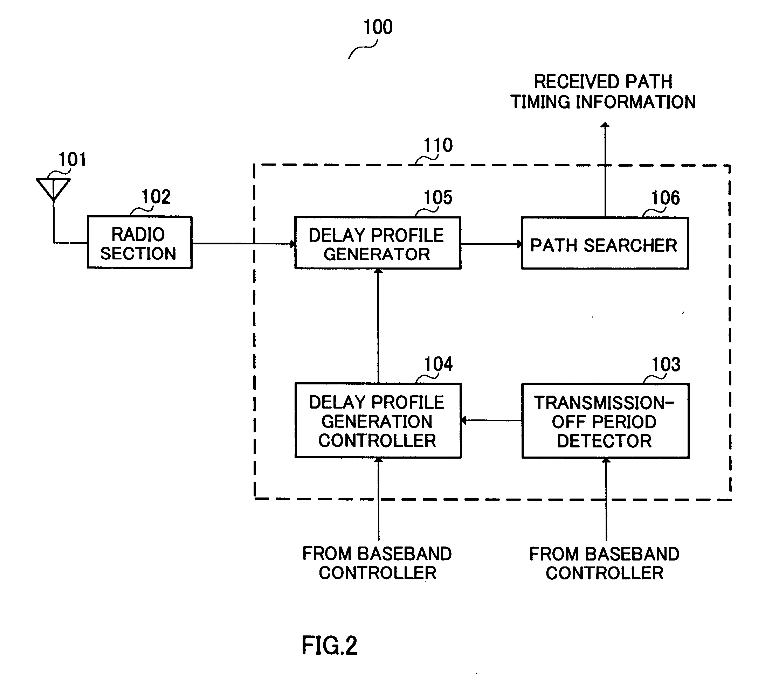

FIG.2 illustrates the configuration of receiving apparatus 100 having synchronization processing apparatus 110 according to Embodiment 1.

Synchronization processing apparatus 110 is configured with transmission-off period detector 103, delay profile generation controller 104, delay profile generator 105, and path searcher 106.

Radio section 102 is a receiver and performs processings on a signal received by antenna 101 including down-conversion from radio frequency to baseband frequency, and outputs the result to delay profile generator 105.

Transmission-off period detector 103 is a communication-off period detector and determines a transmission-off period from compressed mode parameter received as an input from an unillustrated baseband controller and outputs the result to delay profile generation controller 104. In the compressed mode, the mobile apparatus stops communicating at the timing specified by a higher station apparatus by means of compressed mode parameter. The compressed mode parameter determines this transmission-off period, which is a communication-off period, and the length and interval of the transmission-off period.

Delay profile generation controller 104 is a timing controller and determines, on a per channel basis, whether the delay profile creation period and the transmission-off period in the compressed mode overlap, from channel use state information received as an input from the baseband controller and transmission-off period information received as an input from transmission-off period detector 103. If, as a result of determination, the delay profile creation period and the transmission-off period in the compressed mode overlap, delay profile generation controller 104 instructs delay profile generator 105 to change the order of the channels to have delay profiles created such that the delay profile creation period and the transmission-off period in the compressed mode do not overlap one another. The channel use state information refers to information regarding whether each channel is currently being used. In the transmission-off period, the mobile station apparatus searches for the base station apparatus of the handover destination. Consequently, to communicate with the base station apparatuses of the neighboring cells, the mobile apparatus temporarily stops communicating with the base station apparatus in the current cell, from which the handover starts.

Delay profile generator 105 creates delay profiles on a per channel basis, in the order of the channels specified by delay profile generation controller 104. Then, delay profile generator 105 outputs the information of the delay profiles created to path searcher 106.

From the delay profile information received as an input from delay profile generator 105, path searcher 106 detects times where the power level has a peak as a received path timing, and outputs receiving path timing information corresponding respectively to the individual channels, detected on a per channel basis, to an unillustrated demodulator, and the demodulator decodes the received signal based on the received path timings.

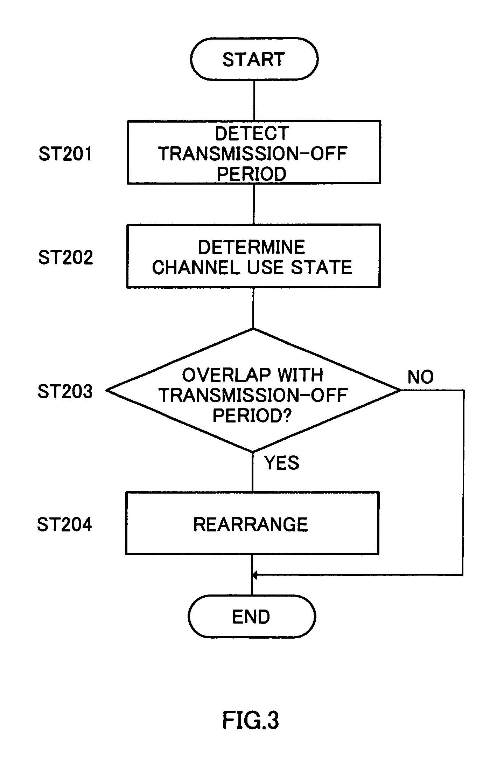

Next, the operation of synchronization processing apparatus 110 will be described with reference to FIG.3.

First, transmission-off period detector 103 detects the transmission-off period in the compressed mode from the compressed mode parameter (Step (ST) 201).

Next, from the channel use state information, delay profile generation controller 104 determines, on a per channel basis, whether or not the channel is being used (ST202).

Next, for those channels that are being used, delay profile generation controller 104 determines whether or not the transmission-off period and the delay profile creation period overlap (ST203).

If there is a channel in which the transmission-off period and the delay profile creation period overlap, delay profile generator 105 changes the order of the channels to have delay profiles created by channel units, so as not to make the transmission-off period and the delay profile creation period overlap (ST204).

On the other hand, if in ST203 there are no channels in which the transmission-off period and the delay profile creation period overlap, no rearranging will be applied.

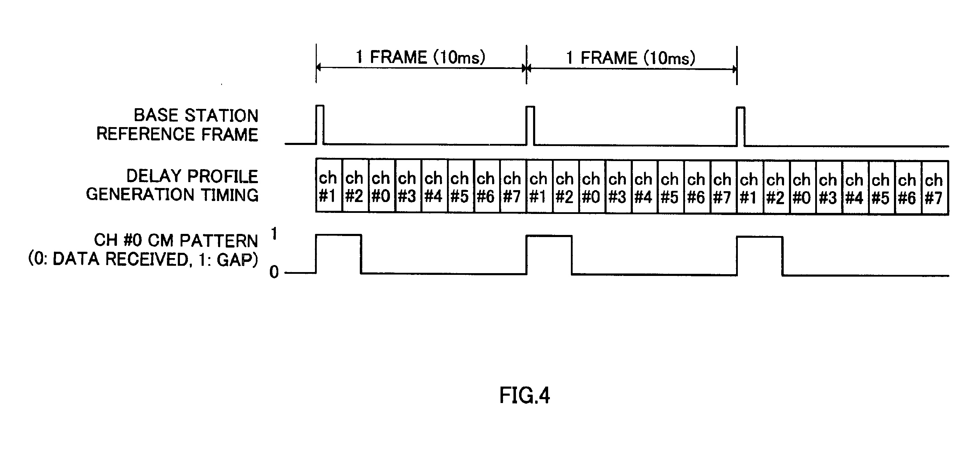

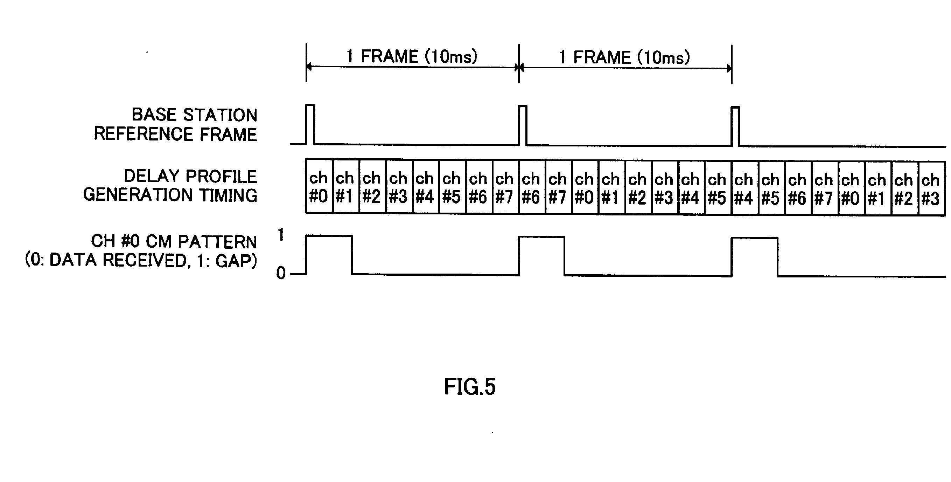

Next, the method of changing the order of the channels to have delay profiles created in delay profile generation controller 104 will be described with reference to FIG.4 and FIG.5. A case will be described here with reference to FIG.4 and FIG. 5 where receiving apparatus 100 is applied to a base station apparatus.

The base station reference frame in FIG. 4 represents the reference frame of the base station apparatus, and the delay profile creation timings in FIG.4 indicate that delay profiles are created for the individual channels by time division, and the CM pattern of ch #0 in FIG.4 indicates that in ch #0 a transmission-off period occurs at the top of each frame. In FIG.4, time advances toward right.

In FIG.4, the mobile apparatus of a communicating party communicates with the base station apparatus using channel #0. Delay profile generation controller 104 controls delay profile generator 105 to create delay profiles in the order of channel #1, channel #2, channel #0, channel #3, channel #4, channel #5, channel #6, and channel #7, so as not to make the delay profile creation period of channel #0 and the transmission off period of channel #0 overlap. By this means, as shown in FIG.4, the delay profile creation period of channel #0 and the transmission-off period of channel #0 do not overlap. In Embodiment 1, the transmission-off period of channel #0 recurs at the frequency of once per frame (10 ms) in a regular cycle. Consequently, by creating delay profiles in the order of the channels shown in FIG.4, the mobile apparatus communicating using channel #0 will not have the transmission-off period and the delay profile creation period overlap in any frame. The timing of the transmission-off period varies between channels. However, the order of the channels to have delay profiles created is changed such that the transmission-off period and the delay profile creation period do not overlap in any frame. Consequently, each channel has a delay profile created with certainty.

Incidentally, if delay profiles are created in the same order of channels in all frames, in some channels the transmission-off period and the delay profile creation period do not overlap, and yet there may be other specific channels where there is a likelihood that the transmission-off period and the delay profile creation period overlap in all frames. The likelihood heightens in proportion to the number of channels in use. As a method for preventing the above-described state, the method of changing the order of the channels to have delay profiles created on a per frame basis is effective, as shown in FIG.5.

The base station reference frame in FIG.5 represents the reference frame of the base station apparatus, and the delay profile creation timings in FIG.5 indicate that delay profiles are created for the individual channels by time division, and the CM pattern of ch #0 in FIG.5 indicates that in ch #0 a transmission-off period occurs at the top of each frame. In FIG.5, time advances toward right.

FIG.5 illustrates a case where the order of the channels to have delay profiles created is made to vary on a per frame basis. Delayprofile generation controller 104 creates delay profiles in the order of channel #0, channel #1, channel #2, channel #3, channel #4, channel #5, channel #6, and channel #7 in the first frame, creates delay profiles in the order of channel #6, channel #7, channel #0, channel #1, channel #2, channel #3, channel #4, and channel #5 in the next frame, and creates delay profiles in the order of channel #4, channel #5, channel #6, channel #7, channel #0, channel #1, channel #2, and channel #3, in the next frame.

By this means, even when in some specific channels the transmission-off period and the delay profile creation period overlap in some frames, in other frames, the transmission-off period and the delay profile generation period do not overlap. Consequently, with these specific channels, delay profiles may be created by averaging a plurality of frames, so that each channel has a delay profile created with certainty.

Thus, according to Embodiment 1, delay profile generation controller 104 changes the order of the channels to have delay profiles created such that the transmission-off period in the compressed mode and the delay profile creation period do not overlap. Consequently, it is possible to prevent a state where the delay profile of a specific mobile apparatus cannot be created and to detect the receiving timing of each mobile apparatus with certainty.

### (Embodiment 2)

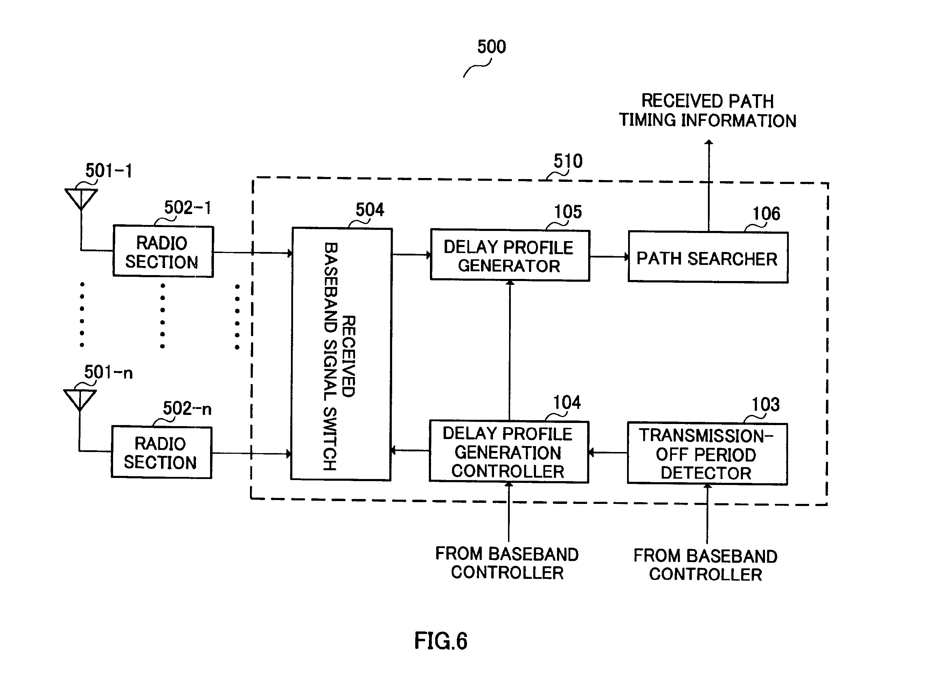

FIG.6 illustrates the configuration of receiving apparatus 500 having synchronization processing apparatus 510 according to Embodiment 2. Receiving apparatus 500 is another version of receiving apparatus 100 of Embodiment 1 shown in FIG.2, with an addition of received baseband signal switch 504, and with antennas 501-1 -501-n instead of antenna 101 and radio sections 502-1-502-n instead of radio section 102. Parts that are identical to those of FIG.2 will be assigned the same numerals as in FIG.2 without further explanations.

Synchronization processing apparatus 510 is configured with received baseband signal switch 504, transmission-off period detector 103, delay profile generation controller 104, delay profile generator 105, and path searcher 106.

Radio sections 502-1~502-n perform processings on signals received by antennas 501-1-501-n including down-conversion from radio frequency to baseband frequency, and outputs the result to received baseband signal switch 504.

Received baseband signal switch 504 controls, by means of a switch, the received baseband signals of all sectors received as inputs from radio sections 502-1~502-n, as to which sector's received baseband signal is to be output from delay profile generation controller 104 to delay profile generator 105, on a per sector processing basis.
The details of received baseband signal switch 504 will be described later.

From the channel use state information input from a baseband controller and transmission-off period information received as an input from transmission-off period detector 103, delay profile generation controller 104 determines, on a per sector basis, whether or not the delay profile creation period and the transmission-off period in a compressed mode overlap. If, as a result of determination, the delay profile creation period and the transmission-off period in the compressed mode overlap, delay profile generation controller 104 instructs delay profile generator 105 to change the order of the channels to have delay profiles created such that the delay profile creation period and the transmission-off period in the compressed mode do not overlap one another.

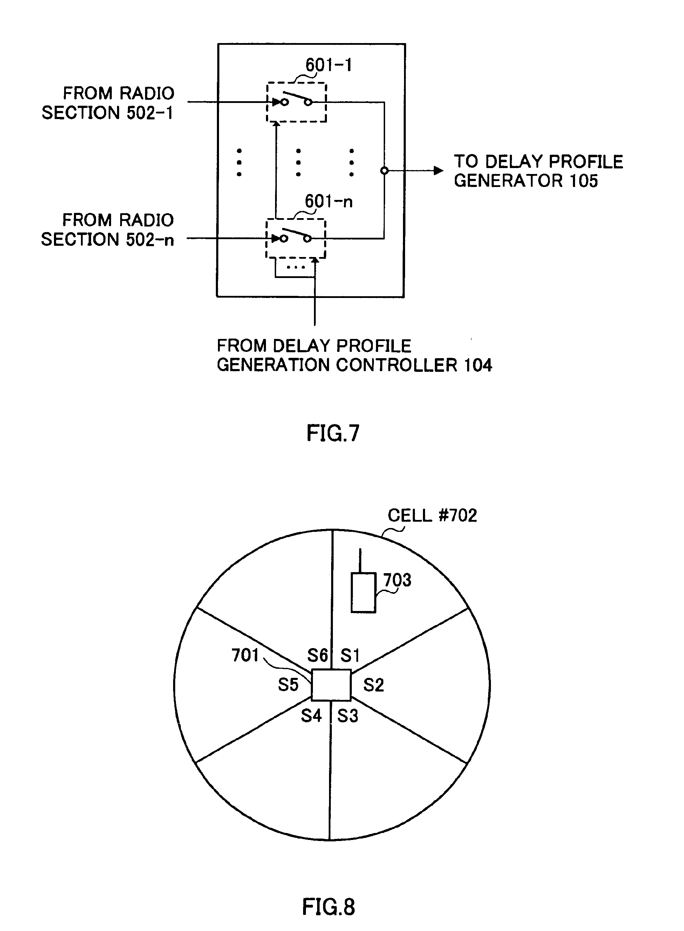

FIG.7 illustrates the configuration of received baseband signal switch 504.

Received baseband signal switch 504 has the same number of switches 601-1-601-n as radio sections 502-1~502-n, and, in accordance with instructions from delay profile generation controller 104, one of switches 601-1~601-n is selected and turned on, and the rest of switches 601-1~601-n are turned off. Every time one of switches 601-1~601-n is turned on, received baseband signal switch 504 outputs a signal received as an input from radio sections 502-1~502-n, to delay profile generator 105. Received baseband signal switch 504 performs these processings for all of switches 601-1~601-n.

Next, the method of rearranging the timings to create delay profiles in delay profile generation controller 104 will be described with reference to FIG.8~FIG.11. A case will be described here with reference to FIG.8~FIG.11 where receiving apparatus 500 is applied to a base station apparatus.

FIG.8 illustrates a state where cell #702 of base station apparatus 701 is divided into six sectors S1~S6. Referring to FIG.8, although mobile apparatus 703 communicates with base station apparatus 701 in the area of sector S1, base station apparatus 701 creates delay profiles of mobile apparatus 703 in all of sectors S1~S6. In this case, normally, the delay profile of mobile apparatus 703 created at the timing corresponding to sector S1 has the maximum level. Normally, multiple mobile apparatuses communicate with base station apparatus 701 in sector S1. However, for ease of explanation, other mobile apparatuses than mobile apparatus 703 will not be described herein.

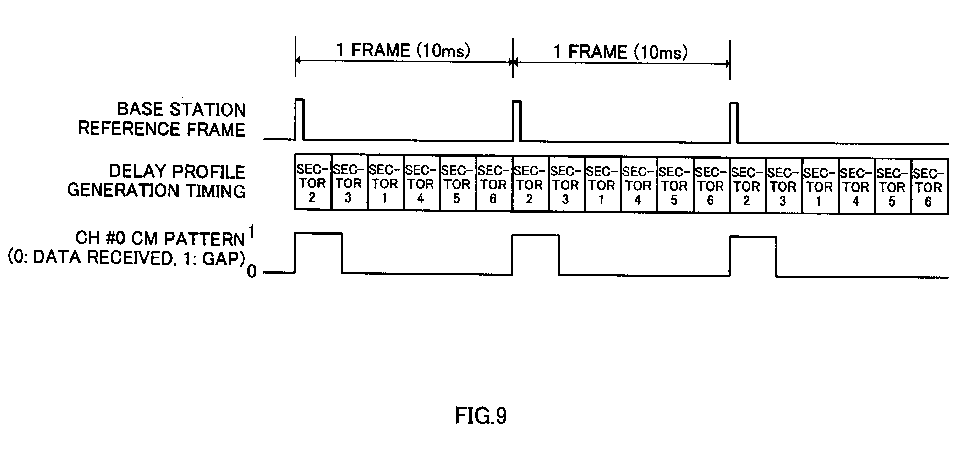

The base station reference frame in FIG. 9 represents the reference frame of the base station apparatus, and the delay profile creation timings in FIG. 9 indicate that delay profiles are created for the individual channels by time division, and the CM pattern of ch #0 in FIG.9 indicates that in ch #0, used by mobile apparatus 703, a transmission-off period occurs at the top of each frame. In FIG.9, time advances toward right.

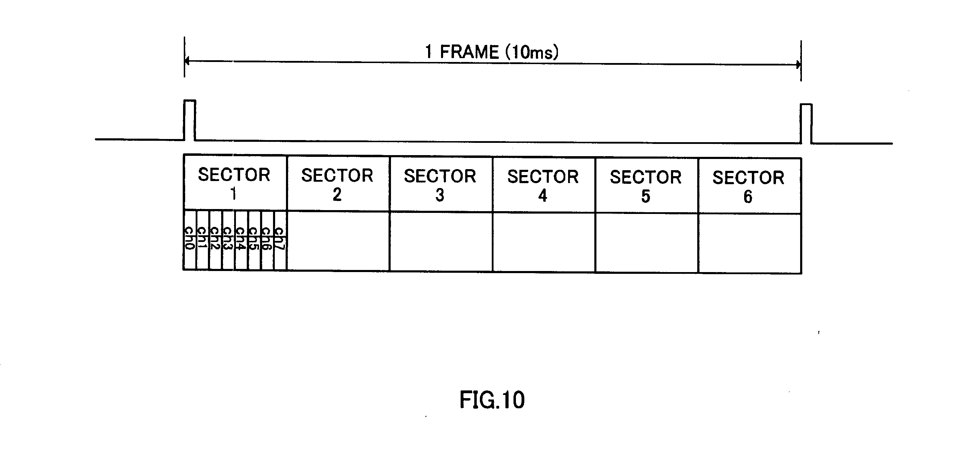

FIG. 10 shows a single frame in FIG. 9 in detail, where time advances toward right.

Referring to FIG.10, each sector is assigned channels #0~#7, and, in the delay profile creation period, the delay profiles of channels #0~#7 are created on a per sector basis. In FIG.10, all sectors are assigned the channels as in sector 1, and so further explanations will be omitted.

In this case, delay profile generation controller 104 controls delay profile generator 105 to create delay profiles in the order of sector S2, sector S3, sector S1, sector S4, sector S5, and sector S6, so as not to make the transmission-off period in channel #0 and the delay profile creation period in channel #0 in sector S1 where mobile apparatus 703 communicates with base station apparatus 701 do not overlap. By this means, as shown in FIG.9, the delay profile creation period in channel #0 in sector S1 and the transmission-off period in channel #0 do not overlap.

Thus, once the order of the sectors to have delay profiles created is set with respect to one frame, all the other frames need only to adopt the same order. Consequently, simple processing makes it possible to create delay profiles with certainty in which high level peaks can be detected and detect receiving timings with certainty.

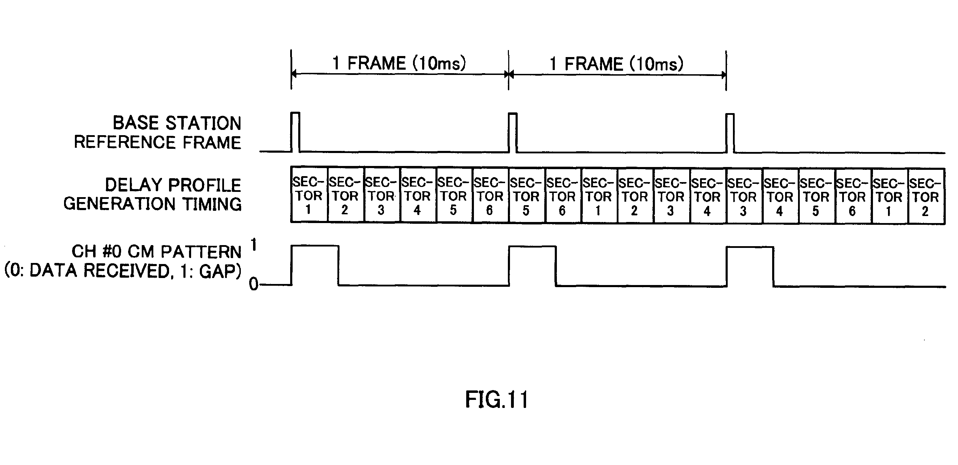

Incidentally, if delay profiles are created in the same order of sectors in all frames, in some sectors the transmission-off period and the delay profile creation period do not overlap, and yet there may be other specific sectors where there is a likelihood that the transmission-off period and the delay profile creation period overlap in all frames. The likelihood increases in proportion to the number of channels in use. As a method for preventing the above-described state, the method of changing the order of the sectors to have delay profiles created on a per frame basis is effective, as shown in FIG.11.

The base station reference frame in FIG.11 represents the reference frame of the base station apparatus, and the delay profile creation timings in FIG.11 indicate that delay profiles are created for the individual channels by time division, and the CM pattern of ch #0 in FIG.11 indicates that in ch #0, a transmission-off period occurs at the top of each frame. In FIG.11, time advances toward right.

FIG.11 illustrates a case where the order of the sectors to have delay profiles created is made to vary on a per frame basis. Delayprofile generation controller 104 creates delay profiles in the order of sector #1, sector #2, sector #3, sector #4, sector #5, and sector #6 in the first frame, creates delay profiles in the order of sector #5, sector #6, sector #1, sector #2, sector #3, and sector #4 in the next frame, and creates delay profiles in the order of sector #3, sector #4, sector #5, sector #6, sector #1, and sector #2 in the next frame.

By this means, even when in some specific channels the transmission-off period and the delay profile creation period overlap in some frames, in other frames, the transmission-off period and the delay profile generation period do not overlap. Consequently, with these specific channels, delay profiles may be created by averaging a plurality of frames, so that each channel has a delay profile created with certainty.

Thus, according to Embodiment 2, delay profile generation controller 104 changes the order of the sectors to have delay profiles created such that the transmission-off period in the compressed mode and the delay profile creation period do not overlap. Consequently, it is possible to prevent a state where the delay profile of a specific mobile apparatus cannot be created and to detect the receiving timing of each mobile apparatus with certainty.

Although a case has been described with Embodiment 2 where the number of sectors is 6, the present invention is by no means limited to this and any number will apply. In addition, the receiving apparatus of Embodiment 2 is applicable to the receiving apparatus of above Embodiment 1.

Although cases have been described in conjunction with above Embodiment 1 and Embodiment 2 where channels #0-#7 are assigned, the present invention is by no means limited to this and any arbitrary number of channels can be provided. Although cases have been described in conjunction with above Embodiment 1 and Embodiment 2 where a transmission-off period in a compressed mode and a delay profile creation period are controlled not to overlap one another, the present invention is by no means limited to this, and it is equally possible to control a transmission stop period and a delay profile creation period not to overlap one another where a mobile apparatus has to stop transmission on a temporary basis for some reason.

As described above, according to the present invention, it is possible to prevent a state where the delay profile of a specific communicating party cannot be created and detect each communicating party's receiving timing with certainty.

The present application is based on Japanese Patent Application No.2003-122475, filed April 25, 2003, entire content of which is incorporated herein by reference.

### Industrial applicability

The present invention relates to a synchronization processing apparatus and a synchronization processing method. The present invention is particularly suitable for use in a synchronization processing apparatus and a synchronization processing method that create delay profiles and detect receiving timings.

## Claims

1. A synchronization processing apparatus comprising:
a delay profile generator that creates a delay profile of a communicating party from a received signal;
a communication stop period determiner that determines a temporary communication stop period from a parameter that indicates said communication stop period to the communicating party;
a timing controller that sets a delay profile creation timing for the communicating party such that the communication stop period of the communicating party determined by the communication stop period determiner and a delay profile creation period for the communicating party in the delay profile generator do not overlap; and
a path searcher that detects a receiving timing where the delay profile has a peak.

2. The synchronization processing apparatus of claim 1, wherein:
the delay profile generator divides time every plurality of channels and creates delay profiles; and
the timing controller sets delay profile creation timings on a per channel basis.

3. The synchronization processing apparatus of claim 1, wherein:
the delay profile generator divides time every plurality of sectors and creates delay profiles; and
the timing controller sets delay profile creation timings on a per sector basis.

4. The synchronization processing apparatus of claim 1, further comprising receivers provided respectively for the plurality of sectors, wherein the timing controller switches between the receivers by means of a switch and sets delay profile creation timings.

5. The synchronization processing apparatus according to claim 1, wherein, when the communicating party searches for a base station apparatus of a handover destination, the communicating party stops transmission and communicates with the base station apparatus in the communication stop period.

6. A receiving apparatus having a synchronization processing apparatus, said synchronization processing apparatus comprising:
a delay profile generator that creates a delay profile of a communicating party from a received signal;
a communication stop period determiner that determines a temporary communication stop period from a parameter that indicates said communication stop period to the communicating party;
a timing controller that sets a delay profile creation timing for the communicating party such that the communication stop period of the communicating party determined by the communication stop period determiner and the delay profile creation timing for the communicating party in the delay profile generator do not overlap; and
a path searcher that detects a receiving timing where the delay profile has a peak.

7. A synchronization processing method comprising the steps of:
creating a delay profile of a communicating party from a received signal;
determining a temporary communication stop period from a parameter that indicates said communication stop period to the communicating party;
setting a delay profile creation timing for the communicating party such that the communication stop period of the communicating party determined by the communication stop period determiner and a delay profile creation period for the communicating party in the delay profile generator do not overlap; and
detecting a receiving timing where the delay profile has a peak.
